(19) **Europäisches Patentamt**

**European Patent Office**

**Office européen des brevets**

(11) Veröffentlichungsnummer: **0 261 569**
**B1**

# (12) EUROPÄISCHE PATENTSCHRIFT

(45) Veröffentlichungstag der Patentschrift:
**28.11.90**

(21) Anmeldenummer: **87113523.2**

(22) Anmeldetag: **16.09.87**

(51) Int. Cl.⁵: **A01C 5/06**, A01B 61/04

(54) **Drillmaschine.**

(30) Priorität: **23.09.86 DE 3632284**

(43) Veröffentlichungstag der Anmeldung:
**30.03.88 Patentblatt 88/13**

(45) Bekanntmachung des Hinweises auf die Patenterteilung:
**28.11.90 Patentblatt 90/48**

(84) Benannte Vertragsstaaten:
**DE ES FR IT**

(56) Entgegenhaltungen:
**EP-A- 0 171 861**
**DE-C- 965 667**
**FR-A- 2 525 855**
**US-A- 4 321 972**

(73) Patentinhaber: **Amazonen-Werke H. Dreyer GmbH & Co.**
**KG, Am Amazonenwerk 9-13,**
**D-4507 Hasbergen-Gaste(DE)**

(72) Erfinder: **Dreyer, Heinz, Dipl.-Ing. Univ. Dr. agr., Am**
**Amazonenwerk 7, D-4507 Hasbergen(DE)**

ACTORUM AG

## Beschreibung

Die Erfindung betrifft eine Drillmaschine zum Ausbringen von Saatgut und/oder Düngemitteln, insbesondere im No-till-Drillverfahren, mit Meißelsäscharen gemäß des Oberbegriffes des Patentanspruches 1.

Eine derartige Drillmaschine ist bereits durch die DE-OS 34 31 327 bekannt. Diese Drillmaschine zeichnet sich durch die Gestaltung der parallelogrammartigen Halterungen, mit denen die Säschare in aufrechter Ebene bewegbar mit dem Rahmen der Drillmaschine verbunden sind, aus. Die parallelogrammartigen Halterungen, die jeweils aus zumindest annähernd parallel zueinander verlaufenden, übereinanderliegenden Streben besteht, ermöglichen den Säscharen beim Auftreffen auf im Boden festsitzende Steine oder sonstige Hindernisse aufgrund der Ausbildung des Unterlenkers als Blattfeder ein seitliches Ausweichen des betreffenden Säschares, wenn das Säschar seitlich übermäßig stark belastet wird. Hierdurch werden also Schäden an den Säscharen bzw. deren Halterungen beim seitlichen Auftreffen bzw. seitlichen Anlaufen vermieden.

Beim Einsatz dieser gemäß der DE-OS 34 31 327 ausgebildeten Drillmaschine hat sich nun jedoch gezeigt, daß eine optimale Steinsicherheit trotz Einknicken des Oberlenkers, wodurch das Säschar nach hinten-oben über das Hindernis hinweggehoben werden soll, und der zusätzlichen Möglichkeit des seitlichen Ausweichens des Säschares bei übermäßig starker seitlicher Belastung durch im Boden festsitzende Hindernisse nicht erreicht wird. Durch die auf Griff gestellte, also in Fahrtrichtung weisende Scharspitze des Säschares kommt es bei fast allen Steinformen oder anderen, in dem Boden festsitzenden Hindernissen zu einem Verhaken der Säscharspitze mit dem jeweils im Boden festsitzenden Gegenstand. Dieses Verhaken der Säscharspitze führt zu einer plötzlichen Erhöhung des Zugwiderstandes des jeweilig betroffenen Säschares, was wiederum zu erhöhten Belastungen und Verbiegungen der an den parallelogrammartigen Halterungen angeordneten Gelenkstellen und dem Säschar selbst führt und es im ungünstigsten Fall zu einem Bruch dieser Bauteile kommt.

Der Erfindung liegt daher die Aufgabe zugrunde, die bekannte Drillmaschine derart weiterzubilden, daß sie ohne eine Beschädigungsgefahr für die Drillschare auch in mit Steinen durchsetzten Böden eingesetzt werden kann.

Diese Aufgabe wird erfindungsgemäß durch das Kennzeichen des Anspruches 1 gelöst. Infolge dieser Maßnahme kann das Säschar in besonders vorteilhafter Weise über den sich im Boden befindlichen Gegenstand hinwegheben und hinweggleiten, ohne daß es zu Beschädigungen am Säschar oder seinen Halterungen kommt. Nach dem Passieren des Hindernisses kehrt das Säschar wieder in seine ursprüngliche Position zurück.

Durch die DE-PS 26 40 749 sind Hackschare mit je einem in der Mitte ihrer Schneidflächen angeordneten aufrechten Steg bekannt. Stößt nun die durch den Steg verstärkte vordere Spitze des Hackschares gegen ein im Boden festsitzendes Hindernis, beispielsweise einen Stein, so kommt es durch die Anlenkung des Säschares an dem Rahmen der Drillmaschine nicht nur zu einem nach hinten Ausweichen des Hackschares, sondern im Zusammenwirken mit dem aufrechten Steg wird das Schar am Hindernis entlang nach vorn-oben bewegt, bis es über dieses hinweggleiten kann. Nach dem Passieren des Hindernisses wird das Hackschar wieder in seine Ausgangsstellung zurückbewegt.

Die einwandfreie Funktion einer derartigen Steinsicherung ist nur gewährleistet, wenn genau die durch den Steg verstärkte vordere Spitze des Hackschares auf den im Boden festsitzenden Gegenstand auftrifft und das Hackschar nach hinten ausweicht. Ein Auftreffen der seitlich neben dem Steg angeordnete, V-förmig seitlich nach oben und außen zueinander abgebogenen Schneidflächen, deren äußeren Kanten schräg nach vorn aufeinander zulaufen, auf ein Hindernis, kann es ebenfalls zu einem Verhaken zwischen dem Hackschar und dem Hindernis führen, was zu einer übermäßigen Belastung der Gelenkstellen der Halterungen oder zu Beschädigungen am Hackschar führt. Auch kann hier ein Nach-oben-gleiten des Schares am Hindernis nur dann erfolgen, wenn über die Steinsicherung die Scharspitze nach hinten schwenkt, weil die Stirnfläche des Steges etwa senkrecht bzw. die Scharspitze gegenüber der Stirnfläche des Steges voreilend verläuft.

Weiterhin ist durch die SE-OS 359 721 eine Drillmaschine mit flügelartigen Säscharen bekannt. Diese Säschare weisen seitlich abstehend, V-förmig nach unter zueinander abgebogene Schneidflächen auf, deren äußere Kanten schräg nach vorn aufeinander zulaufen und die in ihrer Mitte mit einem aufrechten Leitblech versehen sind. Dieses Leitblech erstreckt sich bis vor die Scharspitze des flügelartigen Säschares. Der vordere untere Bereich des Leitbleches weist eine nach hinten-unten geneigt verlaufende Kante auf. Stößt nun dieses Säschar mit seiner nach hinten-unten verlaufenden Kante des Leitbleches auf ein im Boden festsitzendes Hindernis, wird das Schar durch diese schräg nach hinten-unten verlaufende Kante am Hindernis entlang nach oben bewegt, bis es über dieses hinweggleiten kann. Trifft nun aber ein der beiden V-förmigen nach unten zueinander abgebogenen Schneidflächen auf ein Hindernis, führt dieses zu einem Verhaken zwischen dem Säschar und dem sich im Boden befindlichen Hindernis. Dieses Verhaken führt zu einer Beschädigung der an den Halterungen angeordneten Säschare. Nur bei einem mittigen Auftreffen des Säschares auf ein Hindernis, wobei das Säschar mit Hilfe des Leitelementes über das Hindernis weggehoben wird, ist eine ausreichende Steinsicherung gewährleistet. Trifft das Säschar so auf ein Hindernis auf, daß das Leitelement nicht mit dem Hindernis in Berührung kommt, kommt es sehr schnell zu einem Verklemmen zwischen dem flügelartigen Säschar und dem Hindernis, was in den meisten Fällen zu Beschädigungen am Säschar bzw. deren Halterung führt.

Die Ausführungsform sieht in erfindungsgemäßer Weise vor, daß der vordere untere Bereich der Scharspitze um einen Winkel von zumindest 10° und nicht größer als 25° zur Vertikalen nach hinten geneigt ist. Hierdurch wird einerseits erreicht, daß das Schar über die Hindernisse nach oben gehoben und somit hinweggleiten kann, und andererseits kann das Schar noch oben zusätzlich Belastungen tief genug in den Boden eindringen, um eine Säfurche in den unbearbeiteten Boden zu reißen.

In einer weiteren erfindungsgemäßen Ausführungsform ist vorgesehen, daß der Unterlenker der parallelogrammartigen Halterung als Blattfeder ausgebildet ist, wobei die Blattfeder zumindest eine Schleife aufweist. Infolge dieser Maßnahme erfährt das Säschar beim Auftreffen auf im Boden festsitzende Hindernisse eine stoßdämpferartige Wirkung, was zu einer wesentlichen Entlastung der Gelenkstellen der parallelogrammartigen Halterungen führt und somit in besonders vorteilhafter Weise Beschädigungen an den Halterungen und an dem Säschar vermieden werden.

In einer weiteren erfindungsgemäßen Ausführungsform ist vorgesehen, daß der Oberlenker der parallelogrammartigen Halterung als Blattfeder ausgebildet ist und leicht durchgebogen ist, wobei ein Anschlagelement zwischen dem Rahmen und dem Säschar die tatsächliche Länge zwischen den Anlenkpunkten der oberen Strebe der parallelogrammartigen Halterung bestimmt. Hierdurch wird eine besonders vorteilhafte Möglichkeit zum Ausweichen des Säschares in aufrechter Ebene geschaffen, wobei durch eine Verwindung dieser Blattfedern gleichzeitig ein seitliches Ausweichen des Säschares bei übermäßig starker seitlicher Belastung erreicht wird.

Weiterhin sieht die Erfindung vor, daß der vordere schräg nach hinen unten verlaufende Bereich der Scharspitze auf seiner Vorderseite mit einer Aufpanzerung versehen ist, wobei die Aufpanzerung jedoch nicht auf die Unterseite der Scharspitze aufgebracht ist. Infolge dieser Maßnahme soll verhindert werden, daß bei deutlichem Verschleiß der Scharspitze, der Winkel, um den der vordere untere Bereich der Scharspitze zur Vertikalen nach hinten geneigt ist, nicht wesentlich kleiner wird, so daß das Säschar beim Auftreffen auf ein Hindernis durch den vorderen unteren Bereich des nach hinten-unten geneigt verlaufenden Meißelsäschares immer eine nach oben gerichtete Bewegung erzeugt.

Weitere Einzelheiten der Erfindung sind der Beispielsbeschreibung und den Zeichnungen zu entnehmen. Hierbei zeigen

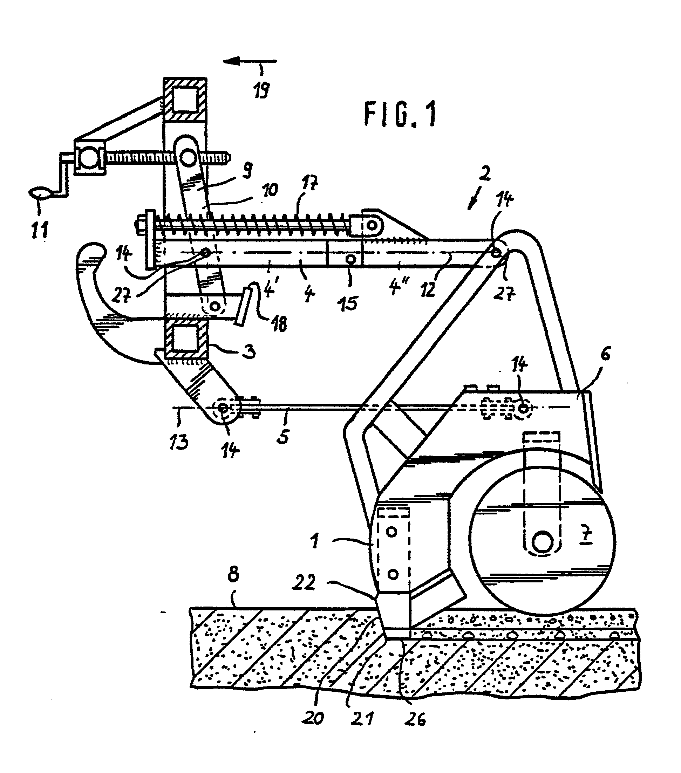

Fig. 1 die erfindungsgemäße Anordnung eines Säschares in der Seitenansicht,

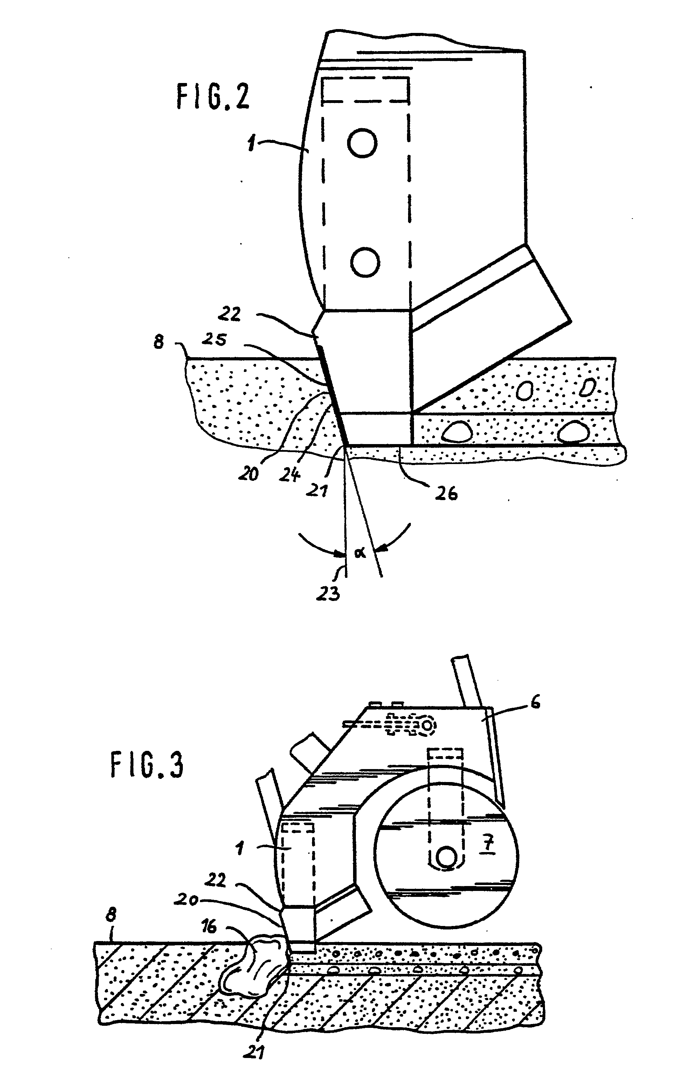

Fig. 2 eine Teilansicht des Meißelsäschares in vergrößerter Darstellung ebenfalls in der Seitenansicht,

Fig. 3 Teilansicht des auf einen Stein aufgelaufenen Meißelsäschares in der Seitenansicht,

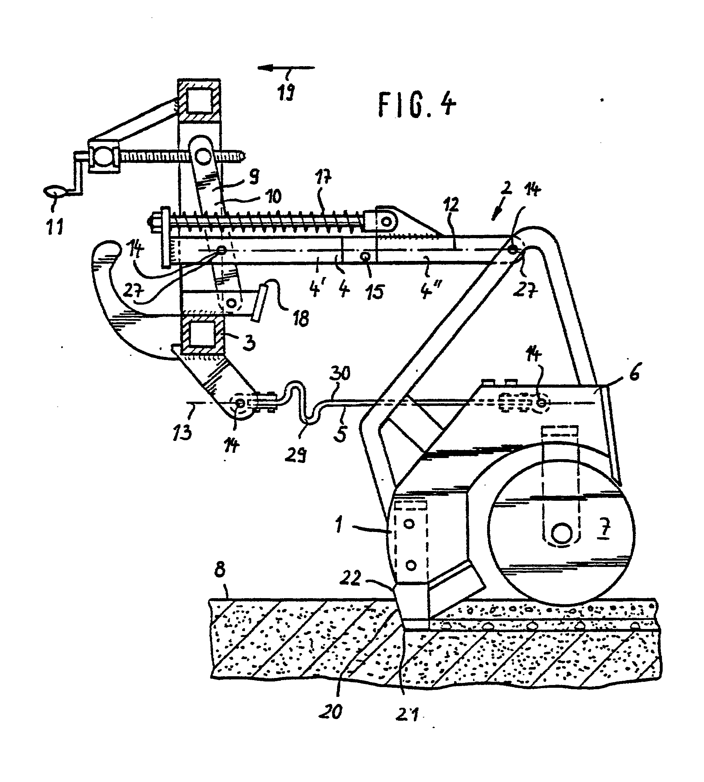

Fig. 4 eine weitere erfindungsgemäße Anordnung eines Säschares in der Seitenansicht und

Fig. 5 eine weitere erfindungsgemäße Anordnung eines Säschares in der Seitenansicht.

Die als Meißelschare 1 ausgebildeten Säschare sind über die parallelogrammartigen Halterungen 2 in aufrechter Ebene bewegbar an dem Rahmen 3 der Drillmaschine angeordnet. Die parallelogrammartige Halterung 2 weist die obere Strebe 4 und die untere Strebe 5 auf, die jeweils an ihrem vorderen Ende an dem Rahmen 3 angelenkt sind und auf ihrer rückwärtigen Seite den Scharhalter 6 des Meißelschares 1 tragen. Hinter dem Meißelschar 1 ist die Tiefenführungsrolle bzw. Druckrolle 7 angeordnet. Diese Rolle 7 bestimmt die Eindringtiefe des Meißelsäschares 1 in den Boden 8. Die parallelogrammartige Halterung 2 ist weiterhin an die zentrale Einstellvorrichtung 9 angeschlossen, über die die Eindringtiefe der Meißelsäschare 1 in den Boden 8 einzustellen ist. Hierzu ist die obere Strebe 4 an dem Schwenkhebel 10 angeordnet, der mittels der Spindel 11 zu verschwenken ist. Durch Verschwenken des Schwenkhebels 10 wird die obere Strebe 4 und somit der Scharhalter 6 verschwenkt. Hierdurch ändert sich die Lage der Rolle 7 in bezug auf das Meißelschar 1, so daß unterschiedliche Eindringtiefen für das Meißelschar 1 einzustellen sind.

Die geraden Verbindungslinien 12 und 13 zwischen den Schwenkachsen 14 der oberen und unteren Streben 4 und 5 verlaufen parallel zueinander. Durch die Teilung der oberen Strebe 4 in die beiden Teilstreben 4' und 4", die durch ein sich außerhalb der geraden Verbindungslinie 12 befindliches Gelenk 15 miteinander verbunden sind, besteht eine Wegschwenkmöglichkeit des Meißelschares 1 auf ein sich im Boden 8 befindliches Hindernis 16 nach hinten-oben. Zwischen den beiden Teilstreben 4' und 4" ist das als Druckfeder 17 ausgebildete elastische Element in einstellbarer Weise angeordnet. Durch diese oberhalb der Teilstreben 4' und 4" angeordnete Druckfeder 17 wird die obere Strebe 4 in ihrer normalen Betriebsstellung gehalten. Bei dem Auftreffen des Meißelschares 1 auf das Hindernis 16 schwenkt das Meißelschar 1 zunächst nach hinten, indem die Teilstreben 4' und 4" entgegen der Wirkung der Druckfeder 17 nach unten durchgedrückt werden. Nach einer kurzen Schwenkung der Teilstrebe 4' kommt diese an den Anschlag 18 zum Anliegen, der somit die Schwenkbewegung der vorderen Teilstrebe 4' begrenzt. Nach Anlage der vorderen Teilstrebe 4' an den Anschlag 18 wird das Meißelschar 1 aufgrund der sich nun ergebenen Hebelverhältnisses durch eine Vorwärtsbewegung der Maschine in Fahrtrichtung 19 über das Hindernis 16 hinweggehoben. Nach dem Überwinden des Hindernisses 16 wird das Meißelschar 1 sofort wieder in den Boden 8 gedrückt.

Dieses über ein Hindernis hinwegheben des Meißelschares 1 wird durch die konstruktive Gestaltung des vorderen unteren Bereiches 20 des Meißelsäschares 1 begünstigt. Dieser Bereich 20 des Meißelsäschares 1 verläuft derart nach hinten unten geneigt, daß die Scharspitze 21 gegenüber dem übrigen vorderen Bereich 22 nacheilend ist. Hierbei ist der vordere untere Bereich 20 der Scharspitze 21 um den Winkel. α von etwa 15° zur Vertikalen 23 nach hinten geneigt. Dadurch, daß der vordere untere Bereich 20 des Meißelsäschares 1 derart nach hinten unten geneigt verläuft, wird das Meißelschar 1 beim Auftreffen auf ein sich im Boden befindliches Hindernis 16 sehr einfach über das Hindernis hinweggehoben. Ein Verhaken der Scharspitze 21 mit sich im Boden 8 befindlichen Hindernissen ist durch diese Anordnung der Scharspitze 21, die gegenüber dem übrigen vorderen Bereich 22 nacheilend angeordnet ist, nicht mehr möglich. Durch diese erfindungsgemäße Gestaltung des vorderen unteren Bereiches 20 des Meißelsäschares 1 wird die Steinsicherheit des Meißelschares 1 wesentlich erhöht, denn auch wenn die beim Auftreffen des Meißelsäschares 1 auf ein Hindernis 16 von diesem Hindernis 16 auf das Meißelschar 1 ausgeübte Kraftkomponente kein nach hintenwegschwenken des Meißelsäschares 1 verursacht, wird dieses Meißelschar ohne Beschädigung über das Hindernis 16 hinweggeschoben. Hierbei spielt es dann keine Rolle mehr, ob die Drillmaschine mit einer besonders kleinen oder einer etwas höheren Arbeitsgeschwindigkeit über den Boden 8 bewegt wird.

Um eine hinreichende Steinsicherheit der Meißelschare 1 zu gewährleisten, muß die Scharspitze 21 immer gegenüber dem übrigen vorderen Bereich 22 nacheilend angeordnet sein. Um dieser Forderung immer gerecht zu werden, ist das einem deutlichen Verschleiß ausgesetzte Meißelschar 1 mit einer Aufpanzerung 24 versehen. Hierbei ist die Aufpanzerung 24 auf der Vorderseite 25 der Scharspitze 21 im vorderen schräg nach hinten unten verlaufenden Bereich 20 angeordnet. Um ein wesentliches Verkleinern des Winkels α zu vermeiden, weist die Unterseite 26 der Scharspitze 21 keine Aufpanzerung auf, so daß die Unterseite 26 der Scharspitze 21 dem natürlichen Verschleiß ausgesetzt ist.

Weiterhin weist das Meißelschar 1 eine Möglichkeit zum seitlichen Ausweichen auf. Dieses seitliche Ausweichen des Meißelschares 1 wird über die als Kugelgelenke ausgebildeten Gelenke 27, über die die obere Strebe 4 an dem Scharhalter 6 des Meißelsäschares 1 und dem Rahmen 3 angelenkt ist, sowie durch die als Blattfeder 28 ausgebildete untere Strebe 5 ermöglicht. Aufgrund der Kugelgelenke 27 kann die Strebe 4 gegenüber dem Rahmen 3 und dem Scharhalter 6 um die Verbindungslinie 12 eine Drehbewegung ausführen. Entsprechend dieser Drehbewegung kommt es zu einem Verwinden der liegend angeordneten Blattfeder 28 der unteren Verbindungsstrebe 5.

Um die beim Auftreffen des Meißelschares 1 auf ein im Boden 8 befindliches Hindernis hervorgerufenen, und auf die einzelnen Schwenkachsen 14 übertragenen Belastungsspitzen abzubauen, ist die untere Strebe 5 der parallelogrammartigen Halterung 2 als eine Schleife 29 aufweisende Blattfeder 30 ausgebildet. Eine derartig ausgebildete Blattfeder 30 hat eine stoßdämpferartige Wirkung auf das Meißelschar 1 sowie auf seine entsprechenden Anlenkstellen, so daß sich eine äußerst elastische Anlenkung des Meißelschares 1 an dem Rahmen 3 der Drillmaschine ergibt, so daß das Meißelschar 1 bei auftretenden Belastungsspitzen, die aber nicht zum Einknicken der oberen Strebe 4 führen, innerhalb eines gewissen Bereiches nach hinten ausweichen kann. Hierdurch wird das Meißelsäschar 1 in vorteilhafter Weise vor Beschädigungen geschützt.

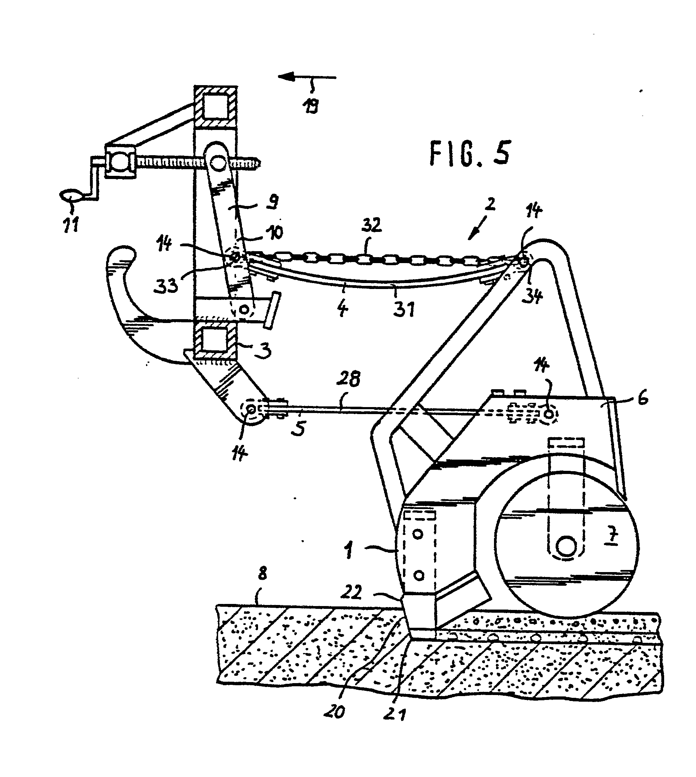

Bei dem Ausführungsbeispiel gemäß Fig. 5 ist die obere Strebe 4 der parallelogrammartigen Halterung 2 als leicht durchgebogene Blattfeder 31 ausgebildet, wobei das als Kette 32 ausgebildete Anschlagelement zwischen dem Rahmen 3 und dem Säschar 1 die tatsächliche Länge zwischen den Anlenkpunkten 33 und 34 der oberen Strebe 4 der parallelogrammartigen Halterung 2 bestimmt. Die untere Strebe 5 ist ebenfalls als Blattfeder 28 ausgebildet. Beide Blattfedern 28 und 31 sind in liegender Anordnung befestigt. Dadurch, daß die Blattfeder 31 leicht durchgebogen ist, läßt sich das Ansprechverhalten, bei dem das Meißelsäschar 1 nach hinten ausweichen kann, genau einstellen. Da die Blattfedern 28 und 31 eine gewisse Eigenelastizität aufweisen, besitzt das Meißelsäschar 1 auch die Möglichkeit zum seitlichen Ausweichen, wenn dies beim Auftreffen auf ein Hindernis erforderlich wird.

Das Zusammenwirken des nach hinten-unten verlaufenden vorderen unteren Bereiches 20 des Meißelsäschares 1 sowie die Ausbildung der oberen und unteren Streben 4 und 5 in den erfindungsgemäßen Ausführungsformen gewährleistet eine gute Steinsicherheit des Meißelsäschares 1 beim Einsatz der Drillmaschine in mit Steinen durchsetzten Böden. Durch die erfindungsgemäße Ausbildung des Meißelsäschares 1, mit seiner nacheilend angeordneten Scharspitze 21, wird ein Verhaken der Scharspitze 21 mit sich in dem Boden 8 befindlichen Hindernissen verhindert.

**Patentansprüche**

1. Drillmaschine zum Ausbringen von Saatgut und/oder Düngemitteln, insbesondere im No-till-Drillverfahren, mit Meißelsäscharen (1), die über parallelogrammartige Halterungen (2) am Rahmen (3) der Drillmaschine in aufrechter Ebene bewegbar angeordnet sind, wobei die parallelogrammartigen Halterungen (2) derart ausgebildet sind, daß sie ein elastisches seitliches Ausweichen des Meißelsäschares (1) beim Auftreffen auf im Boden festsitzenden Hindernissen gestatten, wobei weiterhin die Meißelsäschare (1) an ihren seitlichen Flächen und unteren Enden keine abstehenden Teile, insbesondere Flügel aufweisen, dadurch gekennzeichnet, daß der vordere untere Bereich (20) des Meißelsäschares (1) derart geneigt nach hinten-unten verläuft, daß die Scharspitze (21) gegenüber dem übrigen vorderen Bereich (22) des Meißelsäschares (1) nacheilend ist, daß der vordere untere Bereich (20) des Meißelsäschares (1) um einen Winkel (α) von zumindest 10° zur Vertikalen (23) nach hinten geneigt ist, daß der Winkel (α) nicht größer als 25° ist.

2. Drillmaschine nach Anspruch 1, dadurch gekennzeichnet, daß der vordere untere Bereich (20) der Scharspitze (21) um einen Winkel (α) von zumindest 10 ° zur Vertikalen (23) nach hinten geneigt ist.

3. Drillmaschine nach Anspruch 1, dadurch gekennzeichnet, daß der Oberlenker (4) der parallelogrammartigen Halterung (2) als Blattfeder (31) ausgebildet und leicht durchgebogen ist, wobei ein Anschlagelement (32) zwischen dem Rahmen (3) und dem Meißelsäschar (1) die tatsächliche Länge zwischen den Anlenkpunkten (33, 34) des Oberlenkers (4) der parallelogrammartigen Halterung (2) bestimmt.

4. Drillmaschine nach Anspruch 1, dadurch gekennzeichnet, daß der vordere schräg nach hinten unten verlaufende Bereich (20) des Meißelsäschares (1) aus seiner Vorderseite (25) mit einer Aufpanzerung (24) versehen ist, wobei die Aufpanzerung (24) jedoch nicht auf die Unterseite (26) der Scharspitze (21) aufgebracht ist.

**Revendications**

1. Semoir pour distribuer des semences et/ou des engrais, notamment selon le procédé de semaille No-till, comportant des socs-semoirs (1) qui sont reliés au châssis (3) par l'intermédiaire de supports (2) en forme de parallélogrammes du semoir, pour pouvoir se déplacer dans un plan debout, les supports (2) en forme de parallélogrammes étant conçus de manière à permettre un escamotage latéral élastique des socs-ciseaux (1) lors de la rencontre d'obstacles bloqués dans le sol, les socs-ciseaux (1) n'ayant pas de parties en saillie notamment pas d'ailes à leurs extrémités inférieures et au niveau de leurs surfaces latérales, semoir caractérisé en ce que la zone inférieure avant (20) de chaque soc-ciseau (1) est inclinée vers l'arrière et vers le bas pour que la pointe de soc (21) soit en aval de la zone avant (22) du socciseau (1), pour que la zone inférieure avant (20) du soc-ciseau (1) soit inclinée vers l'arrière d'un angle ($\alpha$) d'au moins 10° par rapport à la direction verticale, l'angle ($\alpha$) n'étant pas supérieur à 25°.

2. Semoir selon la revendication 1, caractérisé en ce que le bras inférieur (5) du support (2) en forme de parallélogramme est un ressort-lame (30) et ce ressort-lame (30) comporte au moins une boucle (29).

3. Semoir selon la revendication 1, caractérisé en ce que le bras supérieur (4) du support (2) en forme de parallélogramme est un ressort-lame (31) légèrement fléchi et un élément de butée (32) est prévu entre le châssis (3) et le soc-ciseau (1) pour déterminer la longueur réelle entre les points d'articulation (33, 34) du bras supérieur (4) du support (2) en forme de parallélogramme.

4. Semoir selon la revendication 1, caractérisé en ce que la zone avant (20) inclinée vers le bas et l'arrière du soc-ciseau (1) est munie sur sa face avant (23) d'un blindage (24) qui n'est toutefois pas prévu sur la face inférieure (26) de la pointe de soc (21).

**Claims**

1. Drill for discharging seeds and/or fertilisers, more especially utilising the no-till drilling method, having chisel-like sowing coulters (1), which are disposed on the frame (3) of the drill, via the intermediary of parallelogram-shaped holders (2), so as to be displaceable in a vertical plane, wherein the parallelogram-shaped holders (2) are so adapted that they permit the chisel-like sowing coulter (1) to yield resiliently and laterally if it encounters obstacles in the ground, wherein also the chisellike sowing coulters (1) have no protruding portions, more especially vanes, on their lateral surfaces and at their lower ends, characterised in that the front, lower region (20) of the chisel-like sowing coulter (1) extends in such a rearwardly and downwardly inclined manner that the coulter tip (21) trails behind the rest of the front region (22) of the chisel-like sowing coulter (1), the front lower region (20) of the chisel-like sowing coulter (1) is rearwardly inclined at an angle ($\alpha$) of at least 10° relative to the vertical (23), and the angle ($\alpha$) is not greater than 25°.

2. Drill according to claim 1, characterised in that the lower guide arm (5) of the parallelogram-shaped holder (2) is a plate spring (30), the plate spring (30) having at least one curve (29).

3. Drill according to claim 1, characterised in that the upper guide arm (4) of the parallelogram-shaped holder (3) is a plate spring (31) and is slightly curved, a stop member (32) between the frame (3) and the chisel-like sowing coulter (1) determining the actual length between the connecting points (33, 34) of the upper guide arm (4) of the parallelogram-shaped holder (2).

4. Drill according to claim 1, characterised in that the front region (20) of the chisel-like sowing coulter (1), which region extends inclinedly rearwardly and downwardly, is provided with a reinforcement (24) on its front surface (25), but the reinforcement (24) is not applied to the underside (26) of the coulter tip (21).

FIG.1

FIG.2

1

22

8
25

20  24  21

26

α

23

FIG.3

6

1

7

22
20

8

16

21

FIG. 4

FIG. 5